# EUROPÄISCHE PATENTSCHRIFT

(11) **EP 0 529 200 B1**
(45) Veröffentlichungstag und Bekanntmachung des Hinweises auf die Patenterteilung: **23.10.1996**
(21) Anmeldenummer: 92107252.6
(22) Anmeldetag: 29.04.1992
(51) Int. Cl.: H04N 5/335, H04N 3/15, H04N 9/09

(54) **Bildsensoranordnung für eine Kamera mit Mehrfachsensoren**
Image sensor arrangement for a camera with multi-sensors
Arrangement de capteurs d'image pour une caméra à capteurs multiples

(30) Priorität: 18.07.1991 DE 4123791
(43) Veröffentlichungstag der Anmeldung: 03.03.1993
(73) Patentinhaber: Daimler-Benz Aerospace Aktiengesellschaft, 81663 München (DE)
(72) Erfinder: Diehl, Hermann, W-8022 Grünwald (DE); Müller, Franz, W-8029 Sauerlach-Arget (DE)

(56) Entgegenhaltungen:
- DE-A- 2 652 586
- US-A- 4 204 230
- US-A- 4 634 882
- RESEARCH DISCLOSURE. Nr. 307, November 1989, HAVANT GB Seite 798; DISCLOSED ANONYMOUSLY (30378): 'Color sensing CCD with staggered photosites'
- PATENT ABSTRACTS OF JAPAN vol. 13, no. 544 (E-855)6. Dezember 1989 & JP-A-1 223 886 (YOKOGAWA ELECTRIC CORP.) 6. September 1989
- PATENT ABSTRACTS OF JAPAN vol. 10, no. 137 (E-405)21. Mai 1986 & JP-A-60 264 183 (MATSUSHITA DENKI SANGYO KK) 27. Dezember 1985
- PATENT ABSTRACTS OF JAPAN vol. 11, no. 143 (E-504)(2590) 9. Mai 1987 & JP-A-61 281 682 (MITSUBISHI ELECTRIC CORP.) 12. Dezember 1986
- PATENT ABSTRACTS OF JAPAN vol. 7, no. 80 (E-168)2. April 1983 & JP-A-58 009 480 (OLYMPUS KOGAKU KOGYO K.K.) 19. Januar 1983
- PATENT ABSTRACTS OF JAPAN vol. 12, no. 335 (E-656)9. September 1988& JP-A-63 098 147 (TOSHIBA CORP.) 28. April 1988

## Beschreibung

Die Erfindung betrifft eine digitale Flächenkamera mit Mehrfachoptik gemäß dem Oberbegriff des Patentanspruchs 1.

Eine derartige Flächenkamera ist aus der DE-A1-34 28 325 bekannt. Dort ist eine auch für photogrammetrische Zwecke verwendbare digitale Flächenkamera beschrieben, bei der mit Hilfe einer Vierfachoptik vier optisch parallele Strahlengänge darstellbar sind, wobei die vier die Vierfachoptik bildenden Einzelobjektive so justiert sind, daß in den vier resultierenden Bildebenen jeweils derselbe Objektausschnitt abgebildet wird. In jeder der vier separaten Bildebenen sind vier quadratische Flächensensoren mit gegenseitigen Abständen angeordnet, die wesentlich kleiner sind als ihre eigene Breite. Bei diesen Flächensensoren kann es sich um matrixartig aus opto-elektronischen Sensorelementen aufgebaute CCD-Sensorblöcke handeln. Die Vierergruppen dieser Flächensensoren sind von Bildebene zu Bildebene gegeneinander verschoben, so daß bei optischer Überlagerung der vier Bildebenen die gesamte Bildfläche von Flächensensoren überdeckt ist. Aufgrund der im Verhältnis zu ihrer Breite relativ geringen Abstände zwischen den Flächensensoren treten bei der optischen Überlagerung erhebliche Überlappungen auf. Es sind also insgesamt erheblich mehr Sensorelemente vorhanden als zur lückenlosen, nicht redundanten Überdeckung der Bildfläche benötigt würden, verbunden mit einer entsprechend größeren Menge an zu verarbeitender Bildinformation. Der apparative Aufwand, auch bedingt durch die Verwendung einer Vierfachoptik, ist bei dieser bekannten Flächenkamera also verhältnismäßig hoch.

Eine ähnliche Flächenkamera ist auch aus der US-A-4 634 882 bekannt.

Der Erfindung liegt daher die Aufgabe zugrunde, eine digitale Flächenkamera der eingangs genannten Art bereitzustellen, welche mit einem möglichst reduzierten apparativen Aufwand auskommt.

Diese Aufgabe ist gemäß der Erfindung durch die im kennzeichenden Teil des Patentanspruchs 1 genannten Merkmale gelöst.

Demnach kommt die digitale Flächenkamera der Erfindung nunmehr lediglich mit einer Dreifachoptik aus, welche durch drei separate Objektive oder durch weniger als drei Objektive unter Verwendung von teildurchlässigen Spiegeln oder Prismen gebildet sein kann. Die Objektive sowie die ggf. verwendeten Spiegel müssen so justiert sein, daß jeweils derselbe Objektausschnitt zur Abbildung kommt. Die in den einzelnen Bildebenen in parallelen Reihen angeordneten Flächensensoren haben nunmehr innerhalb der Reihen Abstände voneinander, die größer sind als ihre jeweilige eigene Breite. Gleichzeitig sind die in zwei einander direkt benachbarten Reihen angeordneten Flächensensoren um mehr als die eigene Breite gegeneinander versetzt, berühren sich also nicht gegenseitig und stehen sozusagen "auf Lücke". Dadurch wird der Tatsache Rechnung getragen, daß die praktisch ausgeführten Flächensensoren, welche beispielsweise aus jeweils 1000 x 1000 matrixartig in Zeilen und Spalten angeordneten Sensorelementen bestehen und noch einen nicht mit solchen Elementen besetzten äußeren Rand aufweisen, hinsichtlich der optisch sensitiven Flächen nicht lückenlos aneinandergesetzt werden können. Daher beziehen sich die Aussagen über Breite und Abstände der Flächensensoren in den Patentansprüchen auf deren optisch sensitive, mit Sensorelementen belegten Flächen. Durch die gegenseitige Versetzung der Flächensensoren in unmittelbar benachbarten Reihen entsteht in jeder Bildebene ein Raster mit Abstand zueinander regelmäßig angeordneter Flächensensoren. Die Abstände der Flächensensoren innerhalb einer Reihe sind nun, abgesehen davon, daß sie größer sein sollen als deren eigene Breite, so bemessen, daß sie gerade der Summe der Breiten je eines der in den übrigen beiden Bildebenen befindlichen Flächensensoren entsprechen. Die so erzeugten Raster von Flächensensoren sind in den drei Bildebenen derart gegeneinander verschoben, daß bei einer optischen Überlagerung die gesamte Bildfläche lückenlos mit Flächensensoren überdeckt ist, ohne daß Überlappungen auftreten. Es wird somit der gesamte Bildinhalt mit geringstmöglichem Aufwand an Sensorelementen vollständig erfaßt.

Es wird in der Praxis zu bevorzugen sein, daß die Flächensensoren in allen drei Bildebenen die gleiche Breite haben. Dann ist es zweckmäßig, die in zwei einander direkt benachbarten Reihen befindlichen Flächensensoren gegeneinander jeweils um das 1,5-fache ihrer Breite zu versetzen. Die Forderung nach gleicher Breite aller Flächensensoren ist jedoch nicht unabdingbar, vielmehr können von Bildebene zu Bildebene Flächensensoren unterschiedlicher Breiten verwendet werden.

Im folgenden werden Ausführungsbeispiele der Erfindung anhand von Abbildungen näher erläutert. Es zeigen in schematischer Weise:
- Fig. 1: eine digitale Flächenkamera mit aus einem Objektiv und zwei teildurchlässigen Spiegeln bestehender Dreifachoptik und zugehörigem Strahlengang,
- Fig. 2a bis 2c: eine Anordnung von Flächensensoren gleicher Breite in drei separaten Bildebenen,
- Fig. 2d: die optische Überlagerung der Raster von Flächensensoren gemäß den Fig. 2a bis 2c und
- Fig. 3: die optische Überlagerung dreier Raster von Flächensensoren unterschiedlicher Breite.

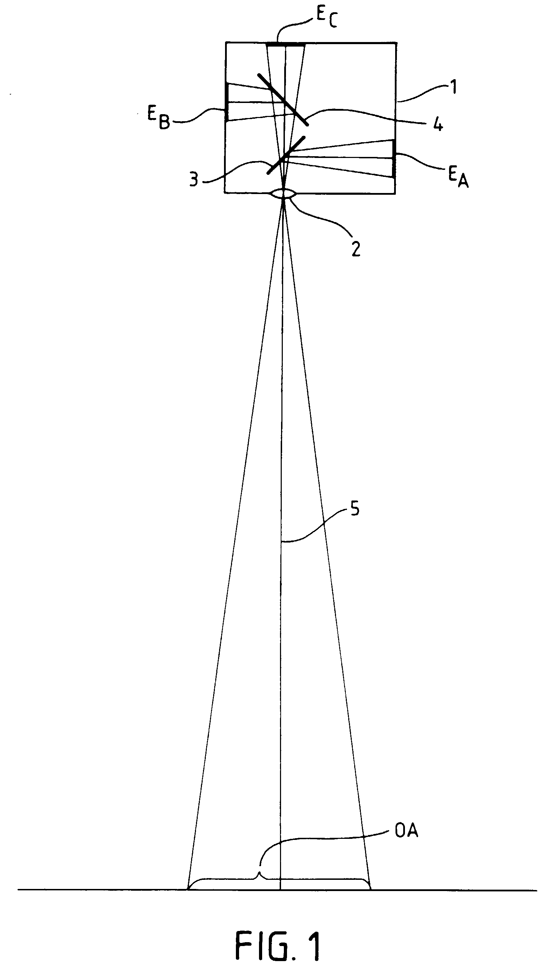

Fig. 1 zeigt in schematischer Weise eine digitale Flächenkamera 1, wie sie beispielsweise von Flugzeugen oder Satelliten mitgeführt werden kann, um Aufnahmen der überflogenen Geländeoberfläche herzustellen. Selbstverständlich kann die Kamera auch zu anderen Aufnahmezwecken verwendet werden. Eine konventionelle Luftbildkamera hat beispielsweise ein Bildformat von ca. 23 x 23 cm² bei einer vom verwendeten Film abhängigen Auflösung von beispielsweise 100 Linienpaaren/mm. Eine digitale Flächenkamera gleicher Auflösung müßte also beispielsweise einen CCD-Flächensensor mit 23.000 x 23.000 matrixartig angeordneten Sensorelementen verwenden. Derartige Flächensensoren sind auf absehbare Zeit nicht verfügbar.

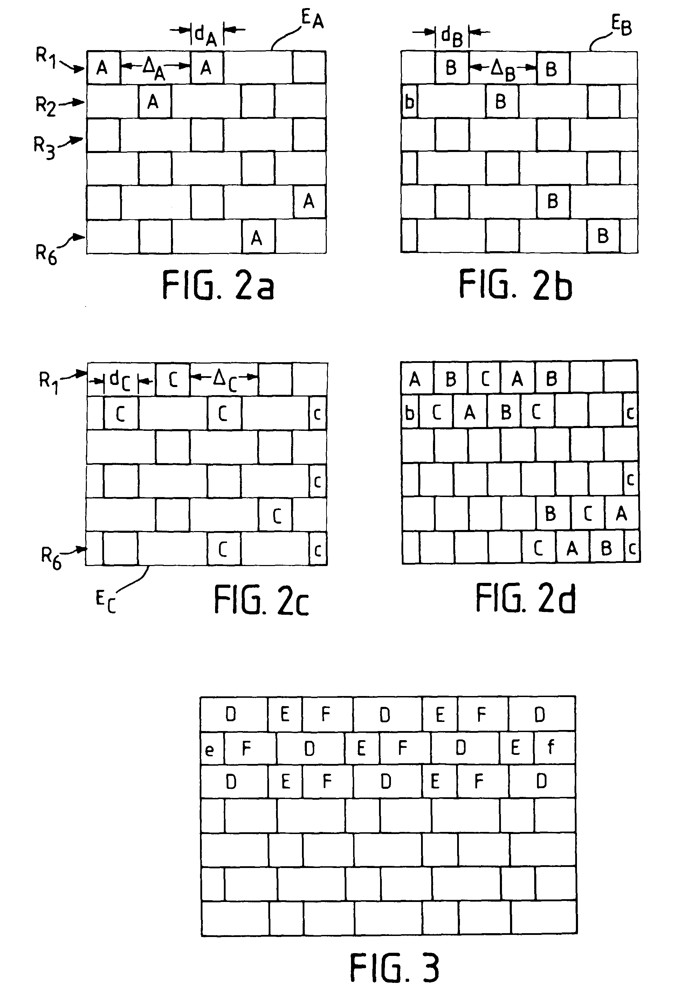

Die digitale Flächenkamera gemäß der Erfindung verwendet daher eine Dreifachoptik, welche im Falle der Fig. 1 durch ein Objektiv 2 sowie zwei im Strahlengang nachgeschaltete, teildurchlässige Spiegel 3 und 4 gebildet wird. Diese weisen gegenüber der optischen Achse 5 eine Neigung von 45° auf. Der teildurchlässige Spiegel 3 kann beispielsweise so ausgebildet sein, daß er zwei Drittel der einfallenden Intensität hindurchläßt und ein Drittel davon reflektiert und auf die ihm zugeordnete Bildebene E_{A} lenkt. Der zweite teildurchlässige Spiegel 4 ist zweckmäßig so ausgebildet, daß er die eine Hälfte der einfallenden Intensität hindurchläßt und die andere Hälfte reflektiert. Ihm sind zwei weitere, separate Bildebenen E_{B} sowie E_{C} zugeordnet. Die drei Bildebenen sind jeweils mit rasterförmigen Anordnungen von Flächensensoren belegt, etwa gemäß den Figuren 2a bis 2c, durch deren optische Überlagerung ein zur Abbildung kommender Objektausschnitt OA, beispielsweise ein quadratischer Ausschnitt einer ebenen Geländeoberfläche, definiert ist.

Eine durch ihre Einfachheit bevorzugte Möglichkeit der Anordnung von Flächensensoren in drei separaten Bildebenen ist durch die Fig. 2a bis 2c gegeben. Gemäß Fig. 2a sind in einer ersten Bildebene E_{A} in direkt aneinandergrenzenden, parallelen Reihen R₁ bis R₆ jeweils Flächensensoren A gleicher Breite d_{A} mit jeweils gleichen Abständen Δ_{A} angeordnet. Die Abstände Δ_{A} der Flächensensoren A betragen das Doppelte ihrer Breite d_{A}. Dies entspricht genau der Summe der Breiten d_{B} sowie d_{C} der einzelnen Flächensensoren B und C, welche gemäß den Figuren 2b sowie 2c in zwei weiteren, separaten Bildebenen E_{B} und E_{C} angeordnet sind. Die Flächensensoren A sind in zwei direkt einander benachbarten Reihen, beispielsweise R₁ und R₂, um genau das 1,5-fache ihrer Breite d_{A} gegeneinander versetzt. Damit stehen sie "auf Lücke", und ihre Ecken haben jeweils ausreichende Abstände voneinander, so daß auch die optisch unempfindlichen Ränder der einzelnen Flächensensoren A, welche die dargestellten Flächen umgeben, sich nicht gegenseitig stören.

In den Figuren 2b sowie 2c sind in jeweils einem Randbereich der dargestellten Bildebenen E_{B} und E_{C} noch Flächensensoren b sowie c vorhanden. Diese dienen lediglich dazu, bei der optischen Überlagerung der drei Bildebenen gemäß Fig. 2d die gesamte nutzbare Bildfläche zu einem vollständigen Rechteck zu ergänzen.

Fig. 2d zeigt sie optische Überlagerung der drei in den Figuren 2a bis 2c dargestellten Bildebenen E_{A} bis E_{C}. Die gesamte nutzbare, rechteckige Bildfläche ist somit lückenlos und ohne Überlappung von Flächensensoren überdeckt, wodurch das Bild des Objektausschnittes OA lückenlos in Bildelemente aufgeteilt ist, welche in abwechselnder Weise den Flächensensoren A, B, C sowie b und c der drei unterschiedlichen, separaten Bildebenen zugeordnet sind. Um eine derartige lückenlose Überdeckung zu erreichen, ist es erforderlich, durch genaue Positionierung der einzelnen Bildebenen bzw. der darauf angebrachten Flächensensoren im Strahlengang bzw. an den Innenwänden der Flächenkamera 1 sowie genaue Justierung der teildurchlässigen Spiegel dafür zu sorgen, daß auf der in Fig. 2d dargestellten rechteckigen Bildfläche in jeder einzelnen Bildebene auch derselbe Objektausschnitt zur Abbildung gelangt.

In Fig. 3 ist ein Beispiel dafür dargestellt, daß die in den drei separaten Bildebenen anzuordnenden Flächensensoren nicht die gleiche Breite haben müssen. Gezeigt ist die optische Überlappung dreier Bildebenen, in denen jeweils Flächensensoren D, E und e sowie F und f angeordnet sind, und zwar gemäß der in Fig. 3 gegebenen Verteilung. Die Flächensensoren D, E und F haben jeweils untereinander dieselbe Breite, und auch die übrigen im Patentanspruch 1 angegebenen Forderungen hinsichtlich der Breiten und Abstände sind erfüllt.

Insgesamt ist durch die Erfindung die Möglichkeit gegeben, großflächige Bilder mit hoher Auflösung und so weitgehend wie möglich reduziertem Aufwand an opto-elektronischen Sensorelementen und optischen Hilfsmitteln digital aufzunehmen. Bei den Sensorelementen handelt es sich bevorzugt um CCD-Sensoren, die auf übliche Weise ausgelesen werden. Die bisher als optische Überlagerung bezeichnete Zusammensetzung des Gesamtbildes aus den Bildpunktinformationen der den drei separaten Bildebenen zugeordneten Flächensensoren geschieht praktisch erst im Zuge der digitalen Bildauswertung.

## Patentansprüche

1. Digitale Flächenkamera mit mehreren, mit Hilfe einer Mehrfachoptik erzeugten, mindestens teilweise optisch parallelen Strahlengängen und diesen jeweils zugeordneten, separaten Bildebenen zur Abbildung desselben Objektausschnittes, in denen jeweils mit Abstand zueinander rechteckige oder quadratische Flächensensoren vorhanden sind, die aus zeilen- und spaltenweise angeordneten opto-elektronischen Sensorelementen aufgebaut sind, **dadurch gekennzeichnet,** daß
- eine Dreifachoptik (2, 3, 4) mit drei separaten Bildebenen (E_{A}, E_{B}, E_{C}) verwendet ist,
- in jeder Bildebene Flächensensoren (A, B, C; D, E, F) gleicher Breite mit Abstand zueinander in aneinandergrenzenden, parallelen Reihen (R₁ usw.) angeordnet sind,
- die Abstände (Δ_{A}, Δ_{B}, Δ_{C}) zwischen den Flächensensoren innerhalb einer Reihe größer sind als deren Breite und zugleich durch die Summe der Breiten (d_{A}, d_{B}, d_{C}) je eines der in den beiden anderen Bildebenen befindlichen Flächensensoren gegeben sind,
- die Flächensensoren in zwei einander direkt benachbarten Reihen um mehr als die eigene Breite gegeneinander versetzt sind
- und die so gebildeten Raster von Flächensensoren von Bildebene zu Bildebene derart gegeneinander verschoben sind, daß bei optischer Überlagerung der Bildebenen die Bildfläche durch die Gesamtheit der Flächensensoren lückenlos überdeckt ist.

2. Flächenkamera nach Anspruch 1, **dadurch gekennzeichnet,** daß die Flächensensoren (A, B, C) in allen drei Bildebenen (E_{A}, E_{B}, E_{C}) die gleiche Breite haben.

3. Flächenkamera nach Anspruch 2, **dadurch gekennzeichnet**, daß die Flächensensoren (A, B, C) in zwei einander direkt benachbarten Reihen um das 1,5-fache ihrer Breite gegeneinander versetzt sind.

## Claims

1. Digital surface camera with a plurality of at least partially optically parallel paths of rays generated with the aid of a multiple optical system and thereto associated separate image planes for imaging the same object section with rectangular or square surface sensors arranged therein at a respective distance from each other which are composed of line- or slitwise arranged opto-electronic sensor elements, **characterised in that** a
- a triple optical system (2, 3, 4) with three separate image planes (E_{A}, E_{B}, E_{C}) is used;
- surface sensors (A, B, C; D, E, F) of same width are arranged in each image plane at a distance from each other in adjacent parallel rows (R₁ etc.);
- the distances (Δ_{A}, Δ_{B}, Δ_{C}) between the surface sensors within one row are greater than their width and at the same time given by the sum of widths (d_{A,} d_{B}, d_{C}) of one each of the surface sensors positioned in the two other image planes;
- the surface sensors in two directly adjacent rows are offset relative to each by more than the own width; and
- thus established rasters of surface sensors are offset relative to each other from image plane to image plane in such a manner that with optical superposition of the image planes the image surface is covered without gaps by the entirety of the surface sensors.

2. Surface camera according to Claim 1, **characterized in that** the surface sensors (A, B, C) have the same width in all three image planes (E_{A}, E_{B,} E_{C}).

3. Surface camera according to Claim 2, **characterised in that** the surface sensors (A, B, C) in two directly adjacent rows are offset relative to each other by 1.5 times their width.

## Revendications

1. Caméra numérique avec plusieurs trajets de rayons optiquement au moins partiellement parallèles, produits à l'aide d'une optique multiple et, associés à chacun de ceux-ci, des plans d'image distincts pour la reproduction de la partie d'image concernée, dans lesquels sont disposés des détecteurs plans rectangulaires ou carrés espacés les uns des autres, qui sont constitués de détecteurs opto-électroniques élémentaires disposés en lignes ou en colonnes, caractérisée par le fait
- que l'on utilise une optique (2, 3, 4) triple avec trois plans d'image (E_{A}, E_{B}, E_{C}) distincts,
- que des détecteurs plans (A, B, C; D, E, F) de même largeur sont disposés à distance les uns des autres en des rangées (R₁ etc) parallèles, contiguës, dans chaque plan d'image,
- que les distances (Δ_{A}, Δ_{B}, Δ_{C}) entre les détecteurs plans à l'intérieur d'une rangée sont supérieures à la largeur desdits détecteurs et sont déterminées par la somme des largeurs (d_{A}, d_{B}, d_{C}) de chacun des détecteurs plans situés dans les deux autres plans d'image,
- que les détecteurs plans, dans deux rangées consécutives, sont décalés les uns par rapport aux autres d'une valeur supérieure à leur propre largeur et
- que les réseaux de détecteurs plans ainsi formés sont décalés les uns par rapport aux autres, d'un plan d'image à l'autre, de telle sorte que par superposition optique des plans d'image la surface d'image soit couverte sans vide par la totalité des détecteurs plans.

2. Caméra selon la revendication 1, caractérisée par le fait que les détecteurs plans (A, B, C) dans les trois plans d'image (E_{A}, E_{B}, E_{C}) ont la même largeur.

3. Caméra selon la revendication 2, caractérisée par le fait que les détecteurs plans (A, B, C) de deux rangées consécutives sont décalés les uns par rapport aux autres de 1,5 fois leur largeur.
